# EUROPEAN PATENT APPLICATION

(11) **EP 1 051 918 A1**
(43) Date of publication of application: **15.11.2000**
(21) Application number: 99201474.6
(22) Date of filing: 12.05.1999
(51) Int. Cl.: A23L 1/275, A23L 1/303, A23L 1/30, A23K 1/18, A23K 1/16, C09B 61/00

(54) **Method for extracting carotenoids and other anti-oxidants; extracts obtained by this method; food and pet food containing these extracts**

(71) Applicant: Société des Produits Nestlé S.A., 1800 Vevey (CH)
(72) Inventor: Daury, Marc Cédric, 1066 Epalinges (CH); Juillerat, Marcel Alexandre, 1000 Lausanne 26 (CH)
(74) Representative: Vuille, Roman

(57) **Abstract**

A carotenoid-containing plant extract in the form of a lipid-protein complex particularly enriched in carotenoids and other anti-oxidants and process for preparing it, wherein a crushed carotenoid-containing plant material is incubated, then a juice recovered after separation of plant solids is subjected to a heat treatment, a precipitate is then recovered from the heated liquid phase after a second separation to obtain a coloured sludge extract.

## Description

### Field of the Invention

This invention relates to a plant extract containing at least proteins, polysaccharides, lipidic compounds and minerals, said extract being particularly enriched in carotenoids and other anti-oxidants. It also concerns a process for the preparation of such an extract without using any solvent, nor processing aids, nor additives.

### Background to the invention

Pigments from plants are usually isolated using organic solvents. For instance, carotenoids can be extracted with hydrocarbon solvents such as chloroform, hexane and other organic solvents.

G. Salder et al. (Journal of Food Science, 1460-1461, **55**, **5**, 1990) describe a rapid extraction of lycopene and β-carotene from reconstituted tomato paste and pink grapefruit homogenates with hexane-ethanol-acetone (50:25:25). This process provides a pure extract with high yield recoveries of these carotenoids. A major problem is that the use of organic solvent can be harmful for a further processing of these carotenoids in food products, and removing the solvent from such products increases costs.

Nevertheless, extraction methods for carotenoids in general tend to be difficult, time consuming and prone to error due to oxidation and losses in extraction.

In the US patent No 5,510,551, F.A.Graves et al. disclose a process for extracting carotenoids from a carotenoid-containing natural source without using any hydrocarbon solvent, said process consisting in using an hydrocarbon solvent free precipitating agent consisting of potassium hydroxide or magnesium chloride, for example. On one hand, the use of large amount of inorganic salt may be detrimental in food preparations and on the other hand, the addition of minerals (e.g. calcium chloride) reduces extraction yield of lycopene for tomato.

Accordingly, the present invention aims to provide a carotenoid-containing plant extract in the form of a complex enriched in carotenoids and other anti-oxidants and a simple and safe process of extracting this complex from natural sources which avoids the need to use a hydrocarbon solvent or addition of minerals or other processing aids.

### Summary of the Invention

Accordingly, on one aspect, this invention provides a solvent-free process for preparing a plant extract in the form of a lipid-protein complex particularly enriched in carotenoids and other anti-oxidants, wherein a crushed carotenoid-containing plant material is incubated, then a juice recovered after separation of plant solids is subjected to a heat treatment, a precipitate is then recovered from the heated liquid phase after a second separation to obtain a coloured sludge extract.

The precipitated sludge extract may be diluted with water and further sterilised and dried. The obtained dried extract enriched in carotenoids and other anti-oxidants is in a powdery form that can be used in various compositions or as a supplement in food products, for example.

The process according to the invention allows to extract and concentrate carotenoids and other anti-oxidants from natural sources into a lipid-protein complex without using organic solvents or addition of any precipitation aid.

Moreover said process is simple, cost efficient and safe and allows an increase in the yield of extracted active compounds which may be observed compared with other solvent-free method.

In another aspect, this invention provides a carotenoid-containing plant extract in the form of a lipid-protein synergistic complex, particularly enriched in carotenoids and other anti-oxidants.

The plant extract can contain about 1 % to about 10 % by weight based on dry matter of carotenoids and about 0.05 % to 0.5 % of other antioxidants.

In a preferred embodiment tomato is used as a carotenoid-containing plant material, the extract thus may contain at least about 1 % of lycopene and at least about 0.05 % of other anti-oxidants.

The lycopene extract from tomato contains a lipid fraction with long chain triglycerides (more than 95 %) and essential polyunsaturated fatty acids C18:2 and C18:3 correspond to about 50 % of its fatty acid composition.

The plant extract is safe, free of solvent or any additive. It contains the beneficial lipids and anti-oxidants from plant raw material which have a synergistic effect on carotenoids bioavailability.

The invention also relates to the use of a carotenoid-containing plant extract being in the form of a lipid-protein complex particularly enriched in carotenoids and other anti-oxidants as a supplement for food products or for the preparation of cosmetic, dietetical or pharmaceutical compositions.

### Detailed description of the Invention

To carry out the present process, the plant material which is used may be any fruit or vegetable, wether it is roots, seeds, leaves, stems or flowers, containing carotenoids and other anti-oxidant. Accordingly, tomatoes, carrots, apricots, guavas, watermelons, papayas, pink grapefruits, mango, melon, cabbage, broccoli, lettuce, parsley, spinach, watercress or peppers are preferably used. Before processing, the plant material well rinsed may be eventually disinfected with a solution of sodium hypochlorite or with a 70 % alcohol solution.

The plant material may be pelled or not before processing. It is then crushed with or without water.

In a preferred embodiment, the plant material is crushed with water at about 20 to 100 % of the weight of the plant material processed. The resulting pap is incubated for a time and at a temperature sufficient to allow degradation of the cell structures by endogenous enzymes and let lipophilic compounds interact with proteins for a better carotenoids extraction. Accordingly, the pap may be incubated during about 5 min to 24 hr, at a temperature between about 0 °C to 70°C and preferably for about 5 to 120 min at about 20 to 50°C. The crushing and/or incubating steps may be performed under inert gas: CO₂, N₂, Ar, He, alone or mixed, or under partial vacuum.

It is also possible to incubate the pap with food grade microorganisms such as Lactobacillae.

Skin, pulp and seeds may be separated by filtration, centrifugation or sedimentation of the incubated pap, for example so as to obtain a juice. These solid wastes may be also further processed in order to extract carotenoids.

Then, the juice may be left standing up to 24 hr after this first separation at a temperature of about - 20 to 20°C. It is then subjected to a heat treatment. The heat treatment may be performed at a temperature of about 70°C to about 120°C during about 2 s to 60 min, for example and preferably at 90-95°C for about 5 s.

The heat treated juice is preferably immediately cooled down, which leads to the precipitation of carotenoid-containing sediment. The heat treated juice can also be concentrated by evaporation under vaccum, distillation or ultrafiltration, for example, so as to improve further processing.

The heat treated juice is then subjected to a second separation so as to obtain a precipitate in the form of a coloured sludge extract. The precipitate may then be recovered by filtration, centrifugation or sedimentation, for example. The supernatant can be discarded or dried to obtain a flavour powder rich in free amino acids.

The obtained coloured sludge extract contains carotenoid and other anti-oxidants in a protein-pectin network associated with lipidic compounds. It can be further subjected to pasteurisation, sterilisation or high pressure treatment, higher than 300 MPa between - 5°C to 70°C, for example.

The coloured sludge may also be stored at low temperatures or frozen state and protected from light, for example.

The coloured sludge may be dried into a powdery extract particularly enriched in carotenoids and other anti-oxidants, for example. Accordingly, it may be lyophilized, eventually mixed to maltodextrin or other hydrosoluble support and spray-dried or roller-dried.

The sludge or the powdery extract may also be processed so as to remove carbohydrates, the extract may contain free sugar as glucose and fructose that can be eliminated by rinsing or dialysis of the precipitating matter with water.

It can also be stored at low temperatures (between 10°C to -80°C), under vacuum or not and protected from light, for example.

The process according to the invention allows to extract and concentrate carotenoids and other anti-oxidants in a simple way from natural sources into a lipid-protein complex without using organic solvents.

The invention also provides a carotenoid-containing plant extract in the form of a lipid-protein complex particularly enriched in carotenoids and other anti-oxidants, which is preferably prepared according to the above described process.

The extract according to the present invention, is in the form of a synergistic complex which contains carotenoids and other anti-oxidants in a protein-pectin network associated with lipidic compounds.

It may contain about 1 % to about 10 % by weight based on dry matter of carotenoids and about 0.05 % to about 0.5 % by weight based on dry matter of other anti-oxidants.

In a preferred embodiment, said extract may be a tomato extract, which can contain lycopene and other anti-oxidants, such as β-carotene, α-tocopherol, β-tocopherol, δ-tocopherol, γ-tocopherol, vitamin C and folic acid. Such a complex has synergistic properties due to lycopene associated to α-tocopherol, for example, on the inhibition of prostate carcinoma cell proliferation (Pastori et al. Biological and biophysical research communications, 582-585, **250**, **3**, 1998).

Lipidic compounds may include neutral lipid (NL), phospholipid (PL) and glycolipid (GL) fractions, for example, lycopene extract made from tomato may contain 30 to 60 % NL, 20 to 40 % GL and 5 to 30 % PL, for example.

The lycopene extract concentrates long chain fatty acids, (table 5). Essential polyunsaturated fatty acids C18:2 and C18:3 may represent about 50 % of the fatty acids from the extract and preferably about 40 - 60 % C18:2, about 8 - 15 % C18:1 and about 2 - 10 % C18:3. Besides, these long chain triglycerides have a positive effect on the bioavailibility of carotenoids in humans (Borel et al., Journal of nutrition, 1361-1367, **128, 8**, 1998).

Thus, the extract according to the invention, is a synergistic complex wherein simultaneous presence of long chain triglycerides, carotenoids and others anti-oxidants may improve the health benefits.

In another embodiment, this invention also relates to the use of a carotenoid-containing plant extract being in the form of a lipid-protein complex particularly enriched in carotenoids and other anti-oxidants as a supplement for food products or for the preparation of cosmetic, dietetical or pharmaceutical compositions.

Food compositions may contain lycopene from 0.1 g to 2 g of the extract / 100 g serving, for example.

The following examples are given by way of illustration only and in no way should be construed as limiting the subject matter of the present application. Percentages and parts are by weight unless otherwise indicated.

### Examples

### Example 1: Preparation of a tomato extract

Tomatoes are rinsed under water, cut into pieces and processed in a grinder followed by a colloidal mill with water (1:1, w:w). The diluted tomato pap is transferred into a tank and let for incubation under vacuum (0.8 bar depression) and stirring for 60 minutes. The temperature is adjusted to 36°C, from an initial value of 30°C. The incubated tomato solution was centrifuged by a horizontal decanter at 260 l/h and the solids were discarded (skin and seeds) and the red liquid was heat treated at 90°C for 5 s by a scraped surface heat exchanger and cooled down to 4°C. A coloured complex is formed during this step. The heated juice is centrifuged with a bowl centrifuge. The colourless fresh tomato smelling liquid is discarded and the red sludge is sterilised at 126°C for 2 s. The sterilised red solution is frozen on metallic plates and lyophilised for 4 days in a freeze dryer.

The resulting red powder is weighted and transferred into polyamide/polyethylene bags heat-sealed under vacuum and stored between 4°C and -20°C in the dark. Its composition is given in Table 1:

**Table 1:**

| Composition of the tomato extract | |
|---|---|
| Compound | extract |
| Protein | 12 % |
| Lipid | 10 % |
| Pectin | 5.4 % |
| Polysaccharides | 40.7 % |
| Minerals | 4 % |
| Carotenoids | 1.3 % |
| Antioxidant | 93 mg/100g |
| Moisture | 5 % |

### Example 2: Chemical composition of tomato extract obtained in example 1

Different analyses were carried out on the red powder or tomato lycopene extract as obtained in example 1 to determine the amounts of lycopene and other different compounds. Composition is given in following table 2.

**Table 2:**

| Anti-oxidant composition of the incubated tomato pap and the resulting extract | | |
|---|---|---|
| Components | Dry tomato pap | Tomato extract |
| Lycopene | 0.17% | 1.23% |
| β-carotene | 0.01 % | 0.04 % |
| α-tocopherol | 6.15 mg/ 100g | 83.4 mg / 100g |
| β-tocopherol | 0.44 mg/ 100g | 2.90 mg/ 100g |
| γ-tocopherol | 1.97 mg/ 100g | 6.31 mg/ 100g |
| δ-tocopherol | 0.1 mg/ 100g | 0.50 mg/ 100g |

Lycopene is concentrated 7 times in the extract compared to the dry tomato pap. α-tocopherol is concentrated 13 times in the extract.

### Example 3: Carotenoids-rich extracts from carrots

Carrots are peeled and rinsed under water, cut into pieces and processed in a grinder followed by a colloidal mill with water (1:1, w:w). The diluted carrot pap is transferred into a tank and let for incubation under vacuum (0.8 bar depression) and stirring for 60 minutes. The temperature is adjusted to 36°C, from an initial value of 30°C. The incubated tomato solution was centrifuged by a horizontal decanter at 260 l/h and the solids were discarded (fibres) and the orange liquid was heat treated at 90°C for 5 s by a scraped surface heat exchanger and cooled down to 4°C. A coloured complex is formed during this step. The heated juice is centrifuged with a bowl centrifuge. The colourless fresh carrot smelling liquid is discarded and the red sludge is sterilised at 126°C for 2 s. The sterilised orange solution is frozen on metallic plates and lyophilised for 4 days in a freeze dryer.

The resulting orange powder is weighted and transferred into polyamide/polyethylene bags heat-sealed under vacuum and stored between 4°C and -20°C in the dark. Its composition is given in table 3.

**Table 3:**

| Partial composition of the incubated carrot pap and the resulting extract | | |
|---|---|---|
| Components | Dry carrot pap | β-carotene extract |
| β-carotene | 0.04 % | 2.3 % |
| Protein (total N, factor 6.25) | 6 % | 34 % |

### Example 4 Lipid composition

The lipid content and composition was determined in the tomato extract as prepared in example 1.

Total lipids (TL) were extracted and further separated into their neutral lipid (NL), phospholipid (PL) and glycolipid (GL) fractions. Lipid classes were analysed by planar chromatography in combination with scanning densitometry. Moreover, capillary GC was used to analyse the fatty acid composition in TL and the isolated fractions of NL, PL and GL.

TL lipids were extracted at 20°C using the method of Folch-Pi *et al.* (1957). The extract is mixed with water and a chloroform-methanol solution and briefly homogenised. The homogenate is filtered. The filtrate is completed with a KCL solution and let for sedimentation overnight. The lower phase is drawn off, concentrated (Rotavapor) to dryness at 50°C and weighed.

Fractionation of the Total lipids (TL) follows the method described by Rouser *et al.* (1976).

FAMES were prepared using sodium methoxide as catalyst. The latter was neutralized in the final analyse as described previously (Molkentin J. and Precht D., 1998). Sodium hydrogenosulfate monohydrate (100 mg) was added to the reacted sample. Neutralization of the catalyst was completed by vortexing the sample. The precipitated salt was removed by centrifuging the test tube. An aliquot (1 µl) of the resulting supernatant was analyzed by capillary GC. The fatty acid composition was calculated from the absolute area units of integrated peaks.

The main lipid fraction of the tomato extract is mainly composed of neutral lipid (table 4).

**Table 4:**

| Main lipid fractions found in the tomato extract | |
|---|---|
| Lipid factions | % |
| Neutral lipids | 46 |
| Glycolipids | 33 |
| Phospholipids | 10 |
| Non-eluated materials | 11 |

The extract concentrates long chain fatty acids, (table 5). Unsaturated fatty acids C18:1, C18:2 and C18:3 represent more than 60 % of the fatty acids from the extract.

**Table 5:**

| Fatty acid composition of the lipid fraction from the extract | |
|---|---|
| Fatty acids | % |
| C16:0 | 27 |
| C18:0 | 6 |
| C18:1 | 13 |
| C18:2 | 47 |
| C18:3 | 3 |
| C20:0 | 1 |
| Others | 3 |

### Example 5

The general composition of the tomato pap and the resulting lycopene extract as prepared in example 1 is shown in table 1. All the compounds from the original tomato is found in the extract with different concentrations.

The extract is enriched in antioxidants and other lipophilic compounds. The extract concentrates 2 times proteins, 5 times lipids, 7 times lycopene and 10 times tocopherols. Large amounts of carbohydrate is still present, representing about 50 % of the extract (table 6).

**Table 6:**

| Composition of the incubated tomato pap and the resulting extract | | |
|---|---|---|
| Components | Dry Tomato Pap | Lycopene Extract |
| Lycopene | 0.17% | 1.23% |
| β-carotene | 0.01 % | 0.04 % |
| α-tocopherol | 6.15 mg/100g | 83.40 mg/100g |
| β-tocopherol | 0.44 mg/100g | 2.90 mg/100g |
| γ-tocopherol | 1.97 mg/100g | 6.31mg/100g |
| δ-tocopherol | 0.1 mg/100g | 0.50 mg/100g |
| Vitamin C | 225 mg/100g | 34 mg/100g |
| Folic acid | 325 µg/100g | 90 µg/100g |
| Protein (total N, factor 6.25) | 12 % | 21 % |
| Fructose | 25.71 % | 19.91 % |
| Glucose | 23.26 % | 18.25 % |
| Galactose | 0.84 % | 1.15 % |
| Sucrose | 0.61 % | 0.43 % |
| Arabinose | 0.50 % | 0.40 % |
| Mannose | 0.45 % | 0.21 % |
| Xylose | 0.44 % | 0.17 % |
| Rhamnose | 0.27 % | 0.15 % |
| Cellulose | 4.44 % | - |
| Fat (Weibull-Stoldt) | 2.01 % | 9.85 % |
| Pectin | 7.30 % | 5.36 % |
| Moisture | n.d. | 5.19 % |
| Potassium | 3.99 % | 3.17 % |
| Phosphorus | 0.41 % | 0.51 % |
| Magnesium | 0.17% | 0.15 % |
| Sodium | 0.06 % | 0.06 % |
| Iron | 0.01 % | 0.03 % |
| Nitrate (Dionex) | 79 mg/kg | 446 mg/kg |
| Nitrite (Dionex) | < 1 mg/kg | < 1 mg/kg |

### Example 6: Amino acids repartition in lycopene-rich extracts from tomato

Amino acids repartition of the protein matter was determined with the Fluorescamin method. Fluorescamin is a non fluorescent reagent that reacts with primary amino groups in amino acids and peptides to form highly fluorescent compounds.

The precipitated extract obtained after the second separation concentrates 21 % of protein matter using the Kjeldahl method (the total nitrogen is converted in protein using a factor of 6.25). This protein matter is composed of 21 % of free amino acids and 79 % of protein in the extract (table 7).

The supernatant is a rich source of free amino acids from tomato, it concentrates almost all the free amino acids present in the juice and also a large amount of protein.

**Table 7:**

| Amino acids repartition at different processing steps of the tomato extract | | |
|---|---|---|
| Processing steps | Free amino acids (mol/kg) | Protein (mol/kg) |
| Juice | 6.32 | 5.11 |
| Supernatant | 5.94 | 3.34 |
| Precipitated extract | 0.44 | 1.62 |

### Example 7: Fermented milk enriched in lycopene

A traditional fermented milk with 1-4 % fats was prepared as follow:
After standardizing whole milk, low fat milk or a mixture of both, 0.5 % by weight of lycopene extract as prepared in example 1 are added. The whole was pasteurized in a plate exchanger, the liquid was cooled to the fermentation temperature, a thermophilic or mesophilic lactic ferment was added and incubation was carried out until a pH of < 5 was obtained.

The subsequent operations of filling and sealing pots took place in a conventional manner.

This fermented milk has an excellent nutritional profile particularly due to its balanced array of anti-oxidants, including carotenoids, flavonoids and vitamins.

### Example 8: Pet food composition

A mixture is prepared from 73 % of poultry carcass, pig lungs and beef liver (ground), 16 % of wheat flour, 7 % of water, 2 % of dyes, 0.5 to 2 % of powdery tomato extract as prepared in example 1, vitamins and inorganic salts. This mixture is emulsified at 12°C and extruded in the form of a pudding which is then cooked at a temperature of 90°C. It is cooled to 30°C and cut in chunks.

45 % of these chunks are mixed with 55 % of a sauce prepared from 98 % of water, 1 % of dye and 1 % of guar gum.

Tinplate cans are filled and sterilized at 125°C for 40 min.

This petfood has an excellent anti-oxidant and colour stabilising properties.

### Example 9: Dry Pet food composition,

A dry dog food is made from a base in dry form obtained by extrusion cooking of the ingredients in the following quantities:

| **Ingredients** | |
|---|---|
| Rice | 44 % |
| Meal from poultry waste | 30 % |
| Corn gluten meal | 11 % |
| Soya meal | 10 % |
| Beef suet | 3 % |
| Potassium chloride | 0.8 % |
| Salt, iodized | 0.5 % |
| Lycopen extract (ex.1) | 0.64 % |
| Premix of vitamins | 0.05 % |
| Premix of minerals | 0.01 % |

This pet food has a large variety of anti-oxidants brought by the lycopene extract.

A dry cat food is made from a base in dry form obtained by extrusion cooking of the ingredients in the following quantities:

| | |
|---|---|
| Maize | 27.241 % |
| Wheat | 26.104 % |
| Maize gluten | 13.259 % |
| Soya oilcake | 13.052 % |
| Water | 6.247 % |
| Chicken viscera | 2.940 % |
| Salt | 2.673 % |
| Poultry flour | 2.610 % |
| Beef suet | 1.681 % |
| Calcium carbonate | 1.203 % |
| Lycopene extract (ex.1) | 0.933 % |
| Dehydrated carrot | 0.470 % |
| Yeast | 0.448 % |
| Phosphoric acid | 0.387 % |
| Anhydrous tetrasodium pyrophosphate | 0.304 % |
| Premix of vitamins and minerals | 0.267 % |
| Choline chloride | 0.134 % |
| Potassium sorbate | 0.020 % |
| Citric acid | 0.018 % |
| Grindox | 0.008 % |
| Potassium citrate | 0.001 % |

## Claims

1. A solvent-free process for preparing a plant extract in the form of a lipid-protein complex particularly enriched in carotenoids and other anti-oxidants, wherein a crushed carotenoid-containing plant material is incubated, then a juice recovered after separation of plant solids is subjected to a heat treatment, a precipitate is then recovered from the heated liquid phase after a second separation to obtain a coloured sludge extract.

2. A process according to claim 1, in which the sludge extract is further sterilized and dried.

3. A process according to claims 1 and 2, wherein the plant material is tomatoes, carrots, apricots, guavas, watermelons, papayas, pink grapefruits, mango, melon, cabbage, broccoli, lettuce, parsley, spinach, watercress or peppers.

4. A process according to any of claims 1 to 3, wherein said plant material is incubated at about 0°C to about 70 °C during about 5 min to 24 hr.

5. A process according to any of claims 1 to 4, wherein the plant solids are separated from the juice of the incubated material, by filtration, centrifugation or sedimentation.

6. A process according to any of claims 1 to 5, wherein the heat treatment consists of heating the juice during about 2 s to 60 min at a temperature of about 70°C to 120°C.

7. A process according to any of claims 1 to 6, wherein a storage of the juice after separation of the plant solids is performed at a temperature of about - 20 to 20°C up to 24 hr .

8. A process according to any of claims 1 to 7, in which the second separation is performed by filtration, centrifugation or sedimentation.

9. A caroteinoid-containing plant extract in the form of a lipid-protein synergistic complex being particularly enriched in carotenoids and other anti-oxidants.

10. An extract according to claim 9, which contains about 1 % to about 10 % by weight based on dry matter of carotenoids and about 0.05 % to about 0.5 % by weight of dry matter of other anti-oxidants.

11. An extract according to claim 9 or 10, which contains about 10 % to 30 % by weight based on dry matter of total lipids, in the form of neutral lipid (NL), phospholipid (PL) and glycolipid (GL) fractions.

12. A tomato extract in the form of a lipid-protein synergistic complex which contains about 1 % to about 10 % by weight based on dry matter of carotenoids and about 0.05 % to about 0.5 % by weight of dry matter of other anti-oxidants.

13. A tomato extract according to claim 12 which contains 30 to 60 % NL, 20 to 40 % GL and 5 to 30 % PL and the following main fatty acids 40 - 60 % C18:2,8 - 15 % C18:1 and 2 - 10 % C18:3.

14. A food product containing a plant extract according to any of claims 9 to 13.

15. Use of a plant extract in the form of a lipid-protein synergistic complex being particularly enriched in carotenoids and other anti-oxidants for the preparation of food or petfood products.
